# FASCICULE DE BREVET EUROPEEN

(11) **EP 1 432 321 B1**
(45) Date de publication et mention de la délivrance du brevet: **04.03.2015**
(21) Numéro de dépôt: 02800181.6
(22) Date de dépôt: 03.10.2002
(51) Int. Cl.: A23L 2/39, A23L 1/30, A23G 1/00, A23L 1/36

(54) **GRANULES ET POUDRES POUR BOISSONS INSTANTANEES A INTERET NUTRITIONNEL PREPARES PAR UN PROCEDE DE CUISSON-EXTRUSION**
GRANULATE UND PULVER FÜR INSTANT-GETRÄNKE, DIE MITTELS EINES EXTRUSIONSGARVERFAHRENS HERGESTELLT WERDEN
GRANULES AND POWDERS FOR INSTANT DRINKS WHICH ARE PREPARED USING AN EXTRUSION COOKING METHOD

(30) Priorité: 04.10.2001 FR 0112793
(43) Date de publication de la demande: 30.06.2004
(73) Titulaire: Naturaceutic International LVM Associes, 75013 Paris (FR); Centre de Valorisation des Glucides et Produits Naturels, 80480 Dury (FR)
(72) Inventeur: LEPAGNOL, Jean, F-28210 Chaudon (FR); BARSOTTI, Laura, F-41100 Vendome (FR); VANNIER-MOREAU, Arnaud, F-75016 Paris (FR); PRUDHOMME, Eric, F-80000 Amiens (FR)
(74) Mandataire: Neyret, Daniel Jean Marie
(86) Numéro de dépôt international: PCT/FR2002/003379
(87) Numéro de publication internationale: WO 2003/028484

(56) Documents cités:
- EP-A- 0 920 814
- EP-A- 1 068 807
- DE-U- 29 608 942
- US-A- 3 997 680

## Description

La présente invention a pour objet la préparation par cuisson-extrusion, de granulés ou de poudres, notamment pour boissons instantanées, à partir de fruits à coques et/ou de fruits oléagineux et/ou de graines d'oléagineux, éventuellement et partiellement déshuilés et/ou séchés *in toto.* Plus particulièrement, le procédé de cuisson-extrusion mis en oeuvre pour préparer les granulés ou poudres à forte valeur nutritionnelle selon l'invention, permet d'introduire à haut pourcentage pondéral (≥ 40%) ces matières premières végétales et d'en concentrer leurs principes actifs et leurs nutriments naturels.

Il est connu que les fruits à coque, et notamment les fruits à coque olégineux tels que l'amande, la noix ou la noisette, possèdent des propriétés nutritionnelles intéressantes et complémentaires. Citons pour exemples l'apport en minéraux de l'amande, l'apport en substances anti-oxydantes de la noisette, l'apport en vitamines énergisantes de la châtaigne, l'apport en acides gras essentiels de la noix.

Toutefois, les apports nutritionnels de ces fruits restent limités lors de leur consommation à l'état natif par leur richesse en lipides hypercaloriques ou par leur richesse en eau qui dilue la concentration des nutriments et notamment des protéines, des vitamines ou des minéraux.

Par ailleurs, il est désormais démontré qu'une population de plus en plus importante, notamment chez les enfants et les personnes âgées, présente des troubles digestifs et/ou des allergies lors d'absorption de lait animal et de produits laitiers par intolérance au lactose ou aux protéines lactées. De plus, ces produits contiennent un pourcentage important de graisses saturées qui sont délétères pour les sujets enclins aux maladies cardio-vasculaires.

C'est pourquoi des boissons végétales, agréables pour la consommation courante, plus digestes, non allergisantes, sans acides gras saturés, sans lactose ni cholestérol ont été proposées en substitut du lait animal car elles possèdent un intérêt nutritionnel voire un caractère de nécessité pour une partie de la population.

Dans ce contexte, divers procédés de préparation de produits finis à partir de fruits à coque ont été proposés.

Ainsi, des préparations de « lait » à base d'amandes partiellement déshuilées et directement consommables ont été décrites. Leur procédé de fabrication consiste à disperser une faible quantité de poudre de fruit dans une solution additionnée ou non d'hydrocolloïdes. Cette solution ou cette suspension subit ensuite une opération de chauffage pour solubilisation (EP 0-776-165), et/ou des opérations de broyage, de clarification par centrifugation et de stérilisation UHT (US 5 656 321). Malheureusement, un tel procédé ne permet d'obtenir que 5,5 % de matière sèche dans la préparation finale et en limite la valeur nutritionnelle. Ce type de procédé ne permet pas de conduire à une préparation utile comme substitut de lait animal.

Un autre procédé consiste à fabriquer une poudre instantanée à partir d'une pâte de fruits obtenue par mélange et homogénéisation de fruits broyés, d'eau et de divers ingrédients tels que sucres ou oligopolysaccharides (ES 2 150 878). Cette pâte mère est ensuite traitée par atomisation (« spray-drying ») sur support d'instantanéisation dont la maltodextrine. Un tel procédé nécessite de nombreuses étapes de fabrication, notamment à chaud par traitement UHT, et un pourcentage élevé en poids (58 à 60 %) de maltodextrine ce qui ne permet d'obtenir que 30 à 35 % de fruits ou d'extrait de fruits en poids dans la préparation finale (produit issu directement du spray drying en dehors de toute supplémentation ultérieure) et ce qui limite en conséquence la valeur nutritionnelle du produit. Néanmoins, ces poudres pour boissons instantanées ont été proposées comme substitut de lait animal.

Par ailleurs, les fruits à coque ou des substances végétales issues d'oléagineux ont été largement utilisés pour obtenir des produits finis à caractère visuel ou gustatif attrayant.

Citons à titre d'exemple représentatif l'utilisation de la fève de cacao pour :
- la fabrication, par simple mélange d'ingrédients, d'une poudre non instantanée pour suspension (DE 296 08 942),
- la préparation d'une boisson maltée contenant 5% de cacao et préparée par séchage sous vide d'un mélange liquide (EP 1 068 807).

Parmi les procédés de fabrication utilisés pour la préparation de divers produits finis à visée gustative et directement consommables, le procédé de cuisson-extrusion a été proposé.

Pour exemples représentatifs, citons :
- la fabrication en continu de pâte d'amande à partir d'amandes émondées et par utilisation d'une cuisson à haute température pour permettre le développement des réactions biochimiques de Maillard et ainsi le développement des substances aromatiques (EP 0 247 926 B1),
- la fabrication de granulés par compression de mélanges de fruits aqueux et de fruits oléagineux préalablement broyés (US 4 744 995),
- la fabrication en confiserie de chocolats à consistance solide ou semi-solide (EP 0 820 701),
- la fabrication de produits alimentaires déshydratés tels que soupes, assaisonnements, sauces, extraits de viande ou de légumes, à partir d'ingrédients naturellement hydratés ou additionnés d'eau afin de les rendre ensuite plus hydrophiles donc plus solubles en utilisation courante (US 4 060 645),
- la fabrication de boissons maltées nutritives à goût de cacao (EP 0 920 814),
- la fabrication de pépites à base de cacao obtenues notamment après séchage à haute température (US 3 997 680).

Aucun intérêt nutritionnel, lié à l'utilisation du procédé de cuisson-extrusion et/ou à l'utilisation des fruits à coque ou des substances végétales issues d'oléagineux, n'est indiqué pour les préparations ainsi obtenues.

Le document GB-A-2206029 décrit un procédé de fabrication de produits granulés à base de noix oléogineuses, par exemple des cacahuètes, noix de cajou ou amandes, par extrusion sous conditions douces.

Au vu des préparations actuelles proposées comme substitut du lait animal et décrites dans l'art antérieur, il apparaît nécessaire de développer des préparations ayant des propriétés nutritionnelles améliorées, notamment grâce aux nutriments naturels dont la bio-disponibilité est supérieure à celle des nutriments synthétiques (pour exemple : BURTON G.W. et al., Am. J. Clin. Nutrition, 1998, 67, 669-684). Les auteurs de la présente invention ont mis au point un procédé original qui permet la préparation de granulés ou de poudres, notamment pour boissons instantanées, dans lesquels les apports nutritionnels et diététiques sont accrus grâce à l'utilisation d'un procédé de cuisson-extrusion qui permet l'introduction d'un fort pourcentage de substances végétales, tout en conservant la facilité d'utilisation de telles préparations en granulés ou en poudres solubles ou dispersibles. En effet, les procédés de l'art antérieur, tels que le spray-drying, ne permettent pas de traiter des préparations initiales contenant un fort pourcentage pondéral en substances végétales, notamment oléagineuses, tout en produisant des poudres facilement solubles ou dispersibles en milieu aqueux.

De plus, l'utilisation du procédé de cuisson-extrusion selon l'invention est une solution originale, appropriée et avantageuse du point de vue nutritionnel par le fait qu'une seule étape de fabrication à chaud est nécessaire, et que le temps très court d'exposition de la ou des substances végétales d'origine à une forte température permet, à la différence des produits de l'art antérieur, de conserver en tout ou en grande partie, voire de concentrer, leurs apports nutritionnels naturels.

### Définitions

Selon l'invention, on entend par « substances végétales » des substances choisies parmi le groupe constitué par les fruits à coque, les fruits oléagineux et les graines oléagineuses.

Le terme « fruits à coque » définit des fruits secs ou des amandes entourées de coquilles ligneuses ou d'enveloppes dures, elles-mêmes généralement couvertes d'une enveloppe extérieure épaisse, charnue et/ou fibreuse. Classiquement, ce groupe comprend les fruits à coque de dessert ou de table. Il peut s'agir de « fruits à coque oléagineux » (amandes, noisettes, pistaches et les divers types de noix - noix, noix du Brésil, noix de cajou, noix de pécan, noix de Macadamia) ou de « fruits à coque non oléagineux » (châtaignes).

On entend par fruits « oléagineux » des fruits (à l'exception des fruits à coque) produits par des plantes annuelles ou pérennes qui sont cultivées et exploitées pour leurs fruits riches en huile tels que olive, avocat.

On entend par graines « oléagineuses » des graines riches en huile. Il peut s'agir de graines issues de plantes oléagineuses, c'est à dire de plantes annuelles ou pérennes cultivées et exploitées pour leurs graines riches en huile, telles que tournesol, ricin, lin ; ou de graines non issues de plantes oléagineuses, telles que pignon, caroube.

Dans le cadre de la présente invention, les substances végétales sont plus particulièrement choisies parmi le groupe constitué des amandes, noisettes, noix, châtaignes, noix d'Amazonie, noix de Macadamia, avocats, et graines de caroube.

Les substances végétales utilisées pour la préparation des granulés ou poudre selon l'invention sont donc des produits riches en huile et/ou matières grasses dont les conditions de transformation par les procédés de l'art antérieur sont peu compatibles avec leur introduction à fort pourcentage pondéral dans le mélange initial et le maintien de leurs propriétés nutritionnelles d'origine.

Par granulés ou poudres à « intérêt nutritionnel », on entend des granulés ou poudres à forte teneur en nutriments tels que acides aminés essentiels et acides gras insaturés, en vitamines, minéraux et oligo-éléments, par exemple les vitamines A, C, E, les vitamines du groupe B, ou les minéraux et oligo-éléments tels que calcium, magnésium, manganèse, cuivre, phosphore, fer, zinc, cobalt, sélénium, chrome, fluor, molybdène. Plus particulièrement, les produits à intérêt nutritionnels préparés par cuisson-extrusion selon l'invention se caractérisent par une teneur accrue en nutriments, vitamines, minéraux et oligo-éléments d'origine végétale par rapport à des produits préparés par un procédé classique d'atomisation. Le terme nutritionnel se rapporte donc à l'apport naturel d'éléments métaboliques indispensables aux fonctions de l'organisme, par opposition au terme « nutritif » qui désigne généralement un apport nourrissant en terme de calories.

Dans le cadre de la présente invention, on désigne par « additifs » des ingrédients ajoutés, individuellement ou en combinaison, de préférence aux substances végétales avant extrusion, mais aussi au produit extrudé. Il peut s'agir :
- de glucides, de lipides ou de protéines représentés par exemple par des extraits de fruits ou de légumes ou de graines (autres que les substances végétales définies ci-dessus), des amidons, gommes, dextrines, alginates, gélatines, des hydrolysats ou autolysats de protéines, des graisses ;
- de substances nutritionnelles telles que vitamines, minéraux, oligo-éléments ou acides gras essentiels, d'épices, d'arômes, de colorants ou de sels.

Les caractéristiques du procédé de cuisson-extrusion selon l'invention permettent en effet d'introduire, en tant qu'additifs, des nutriments réputés thermosensibles dans le mélange initial avant extrusion.

Par « mélange aromatique » on entend un mélange comprenant par exemple un extrait hydro-alcoolique végétal, un sirop de céréale associé à un ou des arômes de fruits tels que amande, noisette, châtaigne, vanille ou tout autre arôme utilisé dans l'industrie agroalimentaire.

### Description de l'invention

La présente invention a donc pour objet un procédé de production, préférentiellement en continu, de granulés ou de poudres à intérêt nutritionnel, notamment pour boissons instantanées, à partir de substances végétales par un traitement de cuisson-extrusion dont l'énergie mécanique spécifique (EMS) est comprise entre 25 et 100 Wh/kg et avec une température de fourreau comprise entre 60 °C et 160 °C.

Le procédé selon la présente invention comprend notamment la mise en oeuvre des étapes suivantes :
a) introduction d'une ou plusieurs substances végétales, éventuellement en mélange avec un ou des additifs, dans le cuiseur-extrudeur ;
b) broyage et malaxage du mélange avec une cuisson à température de fourreau comprise entre 60 et 160 °C ;
c) compression du produit obtenu ;
d) extrusion du produit par passage dans une filière placée en sortie du cuiseur-extrudeur ;
e) déshydratation par détente brusque (« expansion ») du produit à l'air libre ;
f) refroidissement par air ventilé ;
g) éventuellement broyage ;
h) éventuellement ajout d'additif(s).

Selon un mode préféré de l'invention, la ou les substances végétales peuvent être utilisées *in toto* et de préférence à un pourcentage pondéral total supérieur à 40 % dans la préparation initiale, de préférence à un pourcentage pondéral total supérieur à 50%, de préférence encore à un pourcentage pondéral total supérieur à 60 %. Avantageusement, la ou les substances végétales sont utilisées après séchage, avec un taux d'eau résiduelle compris entre 2 et 20 %. La ou les substances végétales sont utilisées après déshuilage, avantageusement à froid, sous forme de tourteau dont le taux de lipides résiduels est compris entre 3 et 40 % afin d'obtenir selon la matière végétale mise en oeuvre un produit extrudé plus ou moins huileux pour être apte au broyage. Avantageusement, lesdites substances végétales, éventuellement séchées et/ou déshuilées, sont sous forme de poudre.

Les éventuelles étapes de séchage ou de déshuilage peuvent être mises en oeuvre selon les méthodes classiques connues de l'homme du métier, telles que le séchage à l'air chaud, le pressage à vis, notamment à froid ou l'extraction à l'hexane avec séchage par distillation.

Les additifs peuvent être incorporés sous forme de poudre et/ou de solution. L'ensemble du mélange devra toutefois garder un caractère thermoplastique afin d'autoriser un procédé de cuisson-extrusion à une température compatible avec l'intérêt nutritionnel du produit fini (La cuisson-extrusion. P. COLONNA et G. DELLA VALLE - Collection Technique et Documentation. Ed. Lavoisier, 1994, 545 p.).

Selon une variante de la présente invention, une partie des additifs est ajoutée sous forme d'un mélange aromatique liquide aux substances végétales, et éventuels additifs, avant extrusion, séparément mais rapidement et successivement. Selon une autre variante encore, un mélange aromatique liquide est ajouté après extrusion aux substances végétales et éventuels additifs extrudés, de préférence sous forme de mélange pulvérulent. Rentrent donc dans le cadre de l'invention un procédé dans lequel la ou les substances végétales sont extrudées sous forme de mélange pulvérulent avec addition d'un mélange aromatique liquide après extrusion et un procédé dans lequel la ou les substances végétales sont extrudées sous forme de mélange pulvérulent avec addition d'un mélange aromatique liquide avant extrusion.

La possibilité d'une aromatisation du mélange initial avant extrusion est en effet un atout supplémentaire du procédé. Une telle aromatisation a pour effet de maintenir ou accroître l'attrait gustatif des substances végétales d'origine. Le procédé selon l'invention peut par ailleurs inclure une étape d'aromatisation, ou plus généralement d'ajout d'additif(s), une fois que le produit est extrudé.

Avantageusement, l'introduction avant extrusion d'ingrédients extrudables tels que la maltodextrine dans le mélange initial, à un faible pourcentage pondéral (30 % ou moins), permet d'optimiser la teneur en substance végétale (40 % en poids et plus) tout en maintenant la facilité d'utilisation des préparations de granulés ou de poudres solubles ainsi produites.

Les paramètres représentatifs du procédé objet de la présente invention, sont l'énergie mécanique spécifique et la température dans le cuiseur-extrudeur. Le document, qui est incorporé ici par référence, décrivant l'énergie mécanique spécifique est ; MEUSER F. and VAN LENGERICH B. Systems analytical model for the extrusion of starches. In : Thermal processing and quality of foods. ZEUTHEN P., CHEFTEL J.C., JUL M., LENIGER H., LINKO P., VARELA G., VOS G., Eds. Elsevier Applied Sci. Publ., London, pp. 175-179.

L'EMS du procédé de la présente invention est comprise entre 25 et 100 Wh/kg, et de manière préférentielle entre 35 et 90 Wh/kg.

Le procédé et les applications inhérentes à la présente invention peuvent être réalisés dans tout type de cuiseur-extrudeur, préférentiellement dans un extrudeur bi-vis. Peuvent être cités à titre d'exemples le BC 45 modèle bi-vis co-rotatives et co-pénétrantes, le BC 21, le BC 72 et le BC 82 de la société Clextral, l'extrudeur double vis ZSK 40 de la société Wemer & Pfleiderer Gmbh, l'extrudeur X-5 de Wenger ou le MPF-50/25 de APV Baker.

De manière classique, les vis du cuiseur-extrudeur sont entraînées en rotation autour de leurs axes par un moteur et un réducteur à l'intérieur d'une enceinte allongée formant un fourreau qui les enveloppe.

Selon les produits considérés, les vis peuvent comprendre des tronçons à action positive de différents pas et/ou des tronçons à pas négatifs ou contre-filets, et/ou des tronçons constitués de disques malaxeurs. De manière générale, les vis sont constituées d'une succession de ces différents types de tronçons, formant des zones de traitement des matières premières, et peuvent être adaptées de façon originale et spécifique à chaque mélange de matières premières pour obtenir un produit fini approprié tant en texture, en caractère organoleptique qu'en valeur nutritionnelle.

Les vitesses de vis varient spécifiquement et préférentiellement entre 110 et 450 rpm (rotations par minute) et avantageusement entre 160 et 400 rpm. A cet effet, le débit de matière pulvérulente introduit en amont du cuiseur-extrudeur est compris entre 80 et 250 kg/h et avantageusement entre 130 et 220 kg/h. Le débit d'alimentation en « mélange aromatique» est de préférence compris entre 10 et 20 l/h, avantageusement entre 13 et 17 l/h.

Le fourreau du cuiseur-extrudeur est équipé de plusieurs modules (3 à 7 modules de longueur individuelle de 200 mm dans le cas du Clextral BC 45) pour une longueur globale de fourreau comprise entre 600 et 1400 mm. Ces modules sont soit étanches, soit percés d'un ou plusieurs orifices permettant l'introduction de matières premières dans le cuiseur-extrudeur ou le dégazage instantané du produit mis en oeuvre.

La température du fourreau peut être régulée par un fluide caloporteur, par des colliers chauffants ou des bobines à induction ou encore par un système combiné, notamment chauffage par induction thermique et refroidissement par circulation d'eau froide.

La température peut varier dans les différents modules du fourreau. Avantageusement, la première partie du fourreau (partie d'alimentation en réactifs, souvent matérialisée par le premier module percé d'orifices) est refroidie à une température comprise entre 15 et 50 °C. La température des autres éléments du fourreau est régulée différentiellement entre 60 et 160 °C, de préférence entre 70 et 150 °C.

A l'extrémité du fourreau, est disposé un ensemble filière, à savoir une plaque avant et une filière généralement cylindrique. Avantageusement, un système de couteaux rotatifs est placé sur la face externe de la filière afin de sectionner le produit extrudé en granulés de longueur généralement comprise entre 5 et 15 mm et de texture appropriée pour en permettre un éventuel broyage en poudre soluble ou dispersible en milieu aqueux à froid et/ou à chaud et selon une granulométrie généralement comprise entre 50 et 500 µm, de préférence comprise entre 200 à 300 µm. Selon une première variante, le cordon extrudé est libre de s'expanser totalement avant d'être sectionné en tronçons réguliers. Selon une seconde variante, le cordon d'extrudé est sectionné avant son entière expansion par le biais de couteaux rotatifs positionnés juste après la filière d'extrusion. Un procédé dans lequel le produit extrudé est sectionné avant son expansion et un procédé dans lequel le produit extrudé est sectionné après son expansion rentrent donc dans le cadre de la présente invention. Les mesures de granulométrie peuvent être réalisées par la technique de granulométrie laser, à l'aide d'un granulomètre MALVERN, commercialisé par la société Malvern Instruments S.A.

La poudre peut être obtenue par des moyens classiques de broyage tels que broyage dans des moulins du type moulins à cylindre pour les poudres de granulométrie moyenne type mesh 100, ou moulins à broches pour les poudres de granulométrie plus fine, type mesh 175 ou 200.

La présente invention a également trait à un produit à intérêt nutritionnel, sous forme de granulés ou de poudres , fabriqué à partir de substances végétales par un traitement de cuisson-extrusion. Plus particulièrement, le produit objet de la présente invention est susceptible d'être obtenu par un procédé de cuisson-extrusion tel que décrit ci-dessus

Le produit selon l'invention peut être fabriqué à partir d'une ou plusieurs substances végétales choisies parmi les fruits à coque, les fruits oléagineux et les graines oléagineuses. Préférentiellement, la ou les substances végétales sont choisies parmi le groupe constitué de la châtaigne, l'amande, la noisette, la noix, la noix d'Amazonie, la noix de Macadamia, l'avocat et les graines de caroube.

Selon un mode préféré de l'invention, la ou les substances végétales sont présentes à un pourcentage pondéral total supérieur à 40 %, de préférence supérieur à 50 % en poids, de préférence encore supérieur à 60 % en poids.

Le produit selon la présente invention peut se présenter sous la forme d'une poudre pour boisson instantanée, soluble ou dispersible en milieu aqueux, à froid ou à chaud, avec une granulométrie généralement comprise entre 50 et 500 µm, de préférence comprise entre 200 à 300 µm. Selon un autre aspect de l'invention, le produit se présente sous la forme de granulés de longueur généralement comprise entre 5 et 15 mm, dont la texture est avantageusement appropriée pour permettre leur éventuel broyage en une poudre selon l'invention ou leur sectionnement en pépites ou pétales dites de petit déjeuner.

Grâce à la possibilité d'introduire un fort pourcentage de substances végétales, les produits issus du procédé de la présente invention diffèrent très largement de ceux de l'art antérieur en ce qui concerne leurs qualités nutritionnelles.

En effet, en l'absence de supplémentation finale par des additifs d'intérêt nutritionnel, les produits issus du procédé selon l'invention présentent un intérêt nutritionnel supérieur à celui des poudres instantanées de l'art antérieur, en particulier celles obtenues par le procédé d'atomisation.

Les apports nutritionnels recouvrent en premier lieu les apports en terme de nutriments (protéines, lipides). A titre d'exemple, 100 g d'une poudre instantanée à base d'amandes selon l'invention apportent 22,9 g de protéines et 19 g de lipides au lieu de 12,5 g de protéines et 13,5 g de lipides tels qu'apportés par une produit préparé par le procédé d'atomisation. Les apports résultants en acides aminés essentiels et en acides gras insaturés sont ainsi en adéquation avec les apports recommandés pour la valeur énergétique globale du produit. Les apports nutritionnels recouvrent également et avantageusement les apports de composés vitaminiques, de minéraux et d'oligo-éléments, à propriétés métaboliques énergisantes et/ou minéralisantes et/ou protectrices. A titre d'exemples, on citera des vitamines telles que les vitamines du groupe B, les vitamines A, C, E, ou des minéraux et oligo-éléments tels que calcium, magnésium, manganèse, cuivre, phosphore, fer, zinc, cobalt, sélénium, chrome, fluor, molybdène.

Les produits à base de fruits à coque de la présente invention possèdent ainsi, selon les nutriments considérés et spécifiques au fruit d'origine, des apports nutritionnels supérieurs de 40 à 720 % par rapport à ceux des poudres instantanées produites par le procédé d'affinage séquentiel et d'atomisation. A titre d'exemples :
- une poudre instantanée à base de noisettes issue de la présente invention apporte environ 50% de vitamine E supplémentaire et 3 à 4 fois plus de calcium, magnésium, cuivre et manganèse,
- une poudre instantanée à base de châtaignes issue de la présente invention apporte environ 6 à 7 fois plus de vitamine C,
- une poudre instantanée à base d'amandes issue de la présente invention apporte environ 2 à 4 fois plus de vitamine B9, de fer et de zinc.

De plus, ils permettent d'apporter les nutriments vitaminiques et minéraux pour répondre à 36 jusqu'à 270 % des apports journaliers recommandés (AJR) et des apports nutritionnels conseillés (ANC) chez les enfants ou les adultes tels que définis par la FAO/WHO « Report on recommended nutrient intakes - September 21-30th , 1998 » et dans le rapport « 31 ème série » du comité scientifique de l'alimentation humaine de la commission européenne et dans les limites de sécurité définies le 12 septembre 1995 par le Conseil Supérieur d'Hygiène Publique de France.

Dans le contexte de la présente invention, de nombreuses préparations ont pu être réalisées notamment par variation de la formulation du ou des mélanges avant cuisson-extrusion afin d'obtenir les produits extrudés aux caractères nutritionnels optimaux et aptes éventuellement à être broyés pour obtenir une dispersibilité aqueuse adéquate.

Par exemple, un mélange simple de substances végétales et d'additifs de type glucidique, en particulier de type saccharidique, peut être soumis au procédé de cuisson-extrusion et le produit extrudé est enduit ou mélangé après broyage avec une solution aromatique composée de sirop, de sucre et d'arôme. Avantageusement du point de vue nutritionnel, le produit est issu du traitement d'un mélange aromatique introduit avant extrusion avec le mélange de substances végétales et d'additifs, de préférence pulvérulent, afin notamment d'obtenir une répartition et un apport homogènes des composants et ainsi une bio-disponibilité homogène et synergique des nutriments et des éléments nutritionnels.

Les qualités nutritionnelles améliorées des produits selon la présente invention n'excluent cependant pas la possibilité de supplémenter lesdits produits issus du procédé en éléments d'intérêt nutritionnel tels que vitamines, minéraux, oligo-éléments, acides aminés ou acides gras.

Les exemples suivants non limitatifs sont représentatifs de la présente invention.

### EXEMPLES

Les exemples décrits ci-après ont été réalisés à l'aide du matériel suivant : mélangeur Lodige, extrudeur BC 45 bi-vis (à vis co-rotatives et co-pénétrantes) à 66 kW (Clextral), couteaux rotatifs, lit fluidisé vibrant et refrigéré.

Sauf indications contraires, les pourcentages sont exprimés en poids.

### Exemple 1 : Poudre pour boisson instantanée à base d'amande

Un tourteau d'amandes obtenu par pressage et contenant 27 à 31 % de lipides résiduels est mélangé à d'autres pulvérulents dans les proportions suivantes : tourteau d'amandes 65,9 %, maltodextrine de céréales 27,5 %, sucre de canne 3,3 %, gomme d'acacia et xanthane 3,3 %.

Par ailleurs, un mélange aromatique à 19 % d'eau est introduit en tête du cuiseur-extrudeur et selon la formulation suivante : sirop de céréales 89 %, arômes 11 %

Pour cette formulation, les conditions de cuisson-extrusion sont les suivantes :

| Caractéristiques du profil de vis | Longueur 1000 mm 1 zone à pas négatif, 2 zones de malaxage |
|---|---|
| Températures du fourreau | Module 2 : 85 °C |
| | Module 3 : 135 °C |
| | Module 4: 145 °C |
| | Module 5 : 82 °C |
| Température en sortie de filière | 86 °C |
| Vitesse de vis | 250 tr/min |
| Débit mélange aromatique | 15,75 l/h |
| Débit mélange pulvérulent | 159,25 kg/h |
| Energie Mécanique Spécifique | 47,1 Wh/kg |

Dans ces conditions, la présente invention permet d'apporter et de conserver en grande partie les éléments nutritionnels du fruit d'origine, notamment en terme de nutriments à propriétés minéralisantes et protectrices comme indiqué dans le tableau suivant.

| | Amande native (mg/100 g) | Exemple 1 | | |
|---|---|---|---|---|
| | | Produit fini (mg/100 g) | Equivalent amande (%) | % AJR Enfant |
| Vitamine B9 | 0,06 | 0,04 | 69 | 100 |
| Vitamine E | 23,6 | 5,5 | 23 | 110 |
| Calcium | 266 | 208 | 78 | 42 |
| Magnésium | 274 | 80 | 29 | 100 |
| Fer | 3,1 | 2,5 | 81 | 36 |

A titre comparatif, ces valeurs nutritionnelles du produit de l'invention sont supérieures de 71 à 174 % par rapport au produit équivalent actuellement commercialisé et obtenu par le procédé d'atomisation à partir des mêmes fruits d'origine.

### Exemple 2 : Poudre pour boisson instantanée à base de noisette

Un tourteau de noisettes obtenu par pressage et contenant 15 à 17 % de lipides résiduels est mélangé à d'autres pulvérulents dans les proportions suivantes : tourteau de noisettes 65,6 %, maltodextrine de céréales 27,8 %, saccharose 3,3 %, gomme d'acacia 3,3 %.

Par ailleurs, un mélange aromatique à 20 % d'eau est introduit en tête du cuiseur-extrudeur et selon la formulation suivante : sirop de céréales 89 %, arômes 11 %

Pour cette formulation, les conditions de cuisson-extrusion sont les suivantes :

| Caractéristiques du profil de vis | Longueur 1000 mm 1 zone à pas néqatif, 2 zones de malaxage |
|---|---|
| Températures du fourreau | Module 2 : 70 °C |
| | Module 3 : 140 °C |
| | Module 4 : 140 °C |
| | Module 5 : 73 °C |
| Température en sortie de filière | 107 °C |
| Vitesse de vis | 247 tr/min |
| Débit mélange aromatique | 13,6 l/h |
| Débit mélange pulvérulent | 146,4 kg/h |
| Energie Mécanique Spécifique | 60 Wh/kg |

Dans ces conditions, la présente invention permet d'apporter et de conserver en grande partie les éléments nutritionnels du fruit d'origine, notamment en terme de nutriments à propriétés protectrices anti-oxydantes comme indiqué dans le tableau suivant.

| | Noisette native (mg/100 g) | Exemple 2 | | |
|---|---|---|---|---|
| | | Produit fini (mg/100 g) | Equivalent noisette (%) | % AJR Adulte |
| Vitamine E | 42,7 | 14,2 | 33,3 | 118 |
| Cuivre | 1,8 | 2,2 | 122,2 | 108 |
| Manqanèse | 8,4 | 2,5 | 29,8 | 83 |
| Zinc | 5,2 | 6 | 115,4 | 50 |
| Phosphore | 189 | 524 | 277,2 | 70 |

A titre comparatif, ces valeurs nutritionnelles du produit de l'invention sont supérieures de 50 à 198 % par rapport au produit équivalent actuellement commercialisé et obtenu par le procédé d'atomisation à partir des mêmes fruits d'origine.

### Exemple 3 : Poudre pour boisson instantanée à base de châtaigne

Des châtaignes broyées, éventuellement séchées au préalable, sont mélangées à d'autres pulvérulents dans les proportions suivantes : châtaignes 66,7 %, maltodextrine de céréales 28,3 %, saccharose 2,8 %, hydrocolloïdes 2,2 %.

Par ailleurs, un mélange aromatique à 17 % d'eau est introduit en tête du cuiseur-extrudeur et selon la formulation suivante : sirop de céréales 80 %, arômes 20%.

Pour cette formulation, les conditions de cuisson-extrusion sont les suivantes :

| Caractéristiques du profil de vis | Longueur 1000 mm 1 zone à pas négatif, 1 zone de malaxage |
|---|---|
| Températures du fourreau | Module 2 : 83 °C |
| | Module 3 : 110 °C |
| | Module 4 : 122 °C |
| | Module 5 : 115 °C |
| Température en sortie de filière | 122 °C |
| Vitesse de vis | 375 tr/min |
| Débit mélange aromatique | 15 l/h |
| Débit mélange pulvérulent | 135 kg/h |
| Energie Mécanique Spécifique | 90 Wh/kg |

Dans ces conditions, la présente invention permet d'apporter et de conserver en grande partie les éléments nutritionnels du fruit d'origine, notamment en terme de nutriments à propriétés énergisantes comme indiqué dans le tableau suivant.

| | Châtaigne native (mg/100 g) | Exemple 3 | | |
|---|---|---|---|---|
| | | Produit fini (mg/100 g) | Equivalent châtaigne (%) | % AJR Enfant |
| Vitamine B1 | 0,34 | 0,25 | 73,5 | 36 |
| Vitamine C | 115 | 96 | 83,5 | 274 |
| Magnésium | 81 | 69 | 85,2 | 86 |

A titre comparatif, ces valeurs nutritionnelles du produit de l'invention sont supérieures de 50 à 620 % par rapport au produit équivalent actuellement commercialisé et obtenu par le procédé d'atomisation à partir des mêmes fruits d'origine.

### Exemple 4 : Granulé et poudre pour boisson instantanée à base d'amande et de quinoa

Un tourteau d'amandes obtenu par pressage et contenant 27 à 31 % de lipides résiduels est mélangé à d'autres pulvérulents dans les proportions suivantes : tourteau d'amandes 50,1 %, graine broyée de quinoa 6,0 %, farines de céréales 27,4 %, sucre de canne 8,0 %, fructose 4,0 %, son de blé 4,0 %, sel 0,5 %.

Par ailleurs, un mélange aromatique à 20,5 % d'eau est introduit en tête du cuiseur-extrudeur et selon la formulation suivante : sirop de céréales 88,2 %, arômes 11,8%.

Pour cette formulation, les conditions de cuisson-extrusion sont les suivantes :

| Caractéristiques du profil de vis | Longueur 1000 mm 1 zone à pas négatif, 1 zone de malaxage |
|---|---|
| Températures du fourreau | Module 2 : 80 °C |
| | Module 3 : 150 °C |
| | Module 4 : 135 °C |
| | Module 5 : 70 °C |
| Température en sortie de filière | 89 °C |
| Vitesse de vis | 250 tr/min |
| Débit mélange aromatique | 15 l/h |
| Débit mélange pulvérulent | 200 kg/h |
| Energie Mécanique Spécifique | 61,9 Wh/kg |

Dans ces conditions, la présente invention permet de conserver en grande partie les apports nutritionnels des substances végétales d'origine et notamment en terme de nutriments thermosensibles, à propriétés énergisantes tels que phosphore (62 % du contenu des fruits d'origine), vitamine B1 (80 % du contenu des fruits d'origine) et vitamine C (75 % du contenu des fruits d'origine).

## Revendications

1. Produit à intérêt nutritionnel, sous forme de granulés ou de poudres, fabriqué à partir de substances végétales par un traitement de cuisson-extrusion dans lequel la ou les substances végétales choisies parmi le groupe constitué par les fruits à coque, les fruits oléagineux et les graines oléagineuses sont présentes à un pourcentage pondéral total supérieur à 40 %, dans lequel la ou lesdites substances végétales sont utilisées après déshuilage sous forme de tourteaux dont le taux de lipides résiduels est compris entre 3 et 40%.

2. Produit selon la revendication 1, dans lequel une substance végétale est choisie parmi le groupe constitué par les fruits à coque oléagineux.

3. Produit selon la revendication 2, dans lequel une substance végétale est choisie parmi le groupe constitué par les amandes, noisettes, pistaches, noix, noix du Brésil, noix de cajou, noix de pécan, noix de macadamia.

4. Produit selon la revendication 1, dans lequel une substance végétale est choisie parmi le groupe constitué par les fruits à coque non oléagineux.

5. Produit selon la revendication 4, dans lequel une substance végétale est la châtaigne.

6. Produit selon la revendication 1, dans lequel une substance végétale est choisie parmi le groupe constitué par les fruits oléagineux.

7. Produit selon la revendication 6, dans lequel une substance végétale est l'olive.

8. Produit selon la revendication 1, dans lequel une substance végétale est choisie dans le groupe constitué par les graines oléagineuses issues ou non de plantes oléagineuses.

9. Produit selon l'une quelconque des revendications 1 à 6, sous forme d'une poudre soluble ou dispersible en milieu aqueux pour boisson instantanée.

10. Produit selon l'une quelconque des revendications 1 à 7, dans lequel la ou les substances végétales sont présentes à un pourcentage pondéral total supérieur à 50 %.

11. Produit selon l'une quelconque des revendications 1 à 8, dans lequel la ou les substances végétales sont présentes à un pourcentage pondéral total supérieur à 60 %.

12. Procédé de production d'un produit selon l'une quelconque des revendications précédentes, par un traitement de cuisson-extrusion dont l'énergie mécanique spécifique est comprise entre 25 et 100 Wh/kg et avec une température de fourreau comprise entre 60 °C et 160 °C.

13. Procédé selon la revendication 12, dans lequel la ou les substances végétales sont utilisées *in toto* à un pourcentage pondéral total supérieur à 40 % dans la préparation initiale.

14. Procédé, selon les revendications 12 ou 13, dans lequel la ou les substances végétales sont utilisées après séchage et dont le taux d'eau résiduelle est compris entre 2 et 20 %.

## Patentansprüche

1. Produkt mit Nährwert in Form von Granulaten oder Pulvern, hergestellt aus pflanzlichen Substanzen mittels einer Kochextrusionsbehandlung, wobei die pflanzliche Substanz oder die pflanzlichen Substanzen, die aus der Gruppe bestehend aus Schalenfrüchten, ölhaltigen Früchten und Ölsaaten ausgewählt ist/sind, mit einem Gesamtgewichtsanteil von größer als 40% vorhanden ist/sind, wobei die pflanzliche Substanz oder die pflanzlichen Substanzen nach dem Entölen in Form von Ölkuchen verwendet wird/werden, deren Restlipidspiegel zwischen 3% und 40% beträgt.

2. Produkt gemäß Anspruch 1, wobei eine pflanzliche Substanz aus der Gruppe bestehend aus ölhaltigen Schalenfrüchten ausgewählt ist.

3. Produkt gemäß Anspruch 2, wobei eine pflanzliche Substanz aus der Gruppe bestehend aus Mandeln, Haselnüssen, Pistazien, Walnüssen, Paranüssen, Cashewnüssen, Pekannüssen, Macadamianüssen ausgewählt ist.

4. Produkt gemäß Anspruch 1, wobei eine pflanzliche Substanz aus der Gruppe bestehend aus nicht ölhaltigen Schalenfrüchten ausgewählt ist.

5. Produkt gemäß Anspruch 4, wobei eine pflanzliche Substanz Esskastanie ist.

6. Produkt gemäß Anspruch 1, wobei eine pflanzliche Substanz aus der Gruppe bestehend aus ölhaltigen Früchten ausgewählt ist.

7. Produkt gemäß Anspruch 6, wobei eine pflanzliche Substanz Olive ist.

8. Produkt gemäß Anspruch 1, wobei eine pflanzliche Substanz aus der Gruppe bestehend aus Ölsaaten ausgewählt ist, die von ölhaltigen Pflanzen stammen oder nicht.

9. Produkt gemäß irgendeinem der Ansprüche 1 bis 6 in Form eines in wässriger Umgebung lösbaren oder dispergierbaren Pulvers als Instantgetränk.

10. Produkt gemäß irgendeinem der Ansprüche 1 bis 7, wobei die pflanzliche Substanz oder die pflanzlichen Substanzen mit einem Gesamtgewichtsanteil von größer als 50% vorhanden ist/sind.

11. Produkt gemäß irgendeinem der Ansprüche 1 bis 8, wobei die pflanzliche Substanz oder die pflanzlichen Substanzen mit einem Gesamtgewichtsanteil von größer als 60% vorhanden ist/sind.

12. Verfahren zum Herstellen eines Produktes gemäß irgendeinem der vorhergehenden Ansprüche mittels einer Kochextrusionsbehandlung, deren spezifische mechanische Energie zwischen 25 Wh/kg und 100 Wh/kg beträgt, und mit einer Hülsentemperatur von zwischen 60°C und 160°C.

13. Verfahren gemäß Anspruch 12, wobei die pflanzliche Substanz oder die pflanzlichen Substanzen *in toto* mit einem Gesamtgewichtsanteil von größer als 40% in der Anfangszubereitung verwendet wird/werden.

14. Verfahren gemäß den Ansprüchen 12 oder 13, wobei die pflanzliche Substanz oder die pflanzlichen Substanzen nach dem Trocknen verwendet wird/werden, und wobei deren Restwassergehalt zwischen 2% und 20% beträgt.

## Claims

1. Nutritional product in the form of granules or powders produced from plant substances using an extrusion cooking method, in which the plant substance or substances selected from the group consisting of nuts, oleaginous fruits and oil seeds are present in a total percentage by weight of more than 40%, in which after extraction of the oil the plant substance or substances are used in the form of cakes, the proportion of residual lipids of which is in the range of between 3 and 40%.

2. Product according to claim 1, in which a plant substance is selected from the group consisting of oleaginous nuts.

3. Product according to claim 2, n which a plant substance is selected from the group consisting of almonds, hazelnuts, pistachios, walnuts, brazil nuts, cashew nuts, pecan nuts, macadamia nuts.

4. Product according to claim 1, in which a plant substance is selected from the group consisting of non-oleaginous nuts.

5. Product according to claim 4, in which a plant substance is chestnut.

6. Product according to claim 1, in which a plant substance is selected form the group consisting of oleaginous fruits.

7. Product according to claim 6, in which a plant substance is olive.

8. Product according to claim 1, in which a plant substance is selected from the group consisting of oil seeds that come from oleaginous plants or not.

9. Product according to any one of claims 1 to 6, in the form of a soluble powder or a powder that is dispersible in aqueous medium for an instant drink.

10. Product according to any one of claims 1 to 7, in which the plant substance or substances are present in a total percentage by weight of more than 50%.

11. Product according to any one of claims 1 to 8, in which the plant substance or substances are present in a total percentage by weight of more than 60%.

12. Process for the production of a product according to any one of the preceding claims, using an extrusion cooking method, in which the specific mechanical energy is in the range of between 25 and 100 Wh/kg and with a barrel temperature in the range of between 60°C and 160°C.

13. Process according to claim 12, in which the whole of the plant substance or substances is used in the initial preparation at a total percentage by weight of more than 40%.

14. Process according to claims 12 or 13, in which the plant substance or substances are used after drying, wherein the proportion of residual moisture thereof is in the range of between 2 and 20%.
